# EUROPÄISCHE PATENTSCHRIFT

(11) **EP 2 688 388 B1**
(45) Veröffentlichungstag und Bekanntmachung des Hinweises auf die Patenterteilung: **17.06.2015**
(21) Anmeldenummer: 12705058.1
(22) Anmeldetag: 14.02.2012
(51) Int. Cl.: A01C 15/00, B61D 39/00

(54) **ABDECKPLANENANORDNUNG FÜR EINEN VORRATSBEHÄLTER**
CONVAS DEVICE FOR CONTAINER
DISPOSITIF COMPORTANT UNE BÂCHE POUR TRÉMIE

(30) Priorität: 24.03.2011 DE 102011001519
(43) Veröffentlichungstag der Anmeldung: 29.01.2014
(73) Patentinhaber: Amazonen-Werke H. Dreyer GmbH & Co. KG, 49205 Hasbergen (DE)
(72) Erfinder: JOHANNABER, Stefan, Jan, 49536 Lienen (DE); SCHIEMENZ, Friedhelm, 49205 Hasbergen (DE); WALTER, Achim, 49078 Osnabrück (DE)
(86) Internationale Anmeldenummer: PCT/EP2012/000645
(87) Internationale Veröffentlichungsnummer: WO 2012/126552

(56) Entgegenhaltungen:
- DE-A1- 3 104 374
- DE-A1- 19 818 064
- GB-A- 2 084 241
- GB-A- 2 196 946

## Beschreibung

Die Erfindung betrifft einen Vorratsbehälter einer landwirtschaftlichen Verteilmaschine, mit einer Abdeckplane zum Abdecken des Vorratsbehälters gemäß dem Oberbegriff von Patentanspruch 1.

Derartige Abdeckplanenanordnungen sind beispielsweise durch die DE 198 18 064 A1 bekannt. Derartige Abdeckplanenanordnungen sind preiswert und decken in einfacher Weise die Einfüllöffnungen von Vorratsbehältern landwirtschaftlicher Verteilmaschinen, wie beispielsweise Sämaschinen, Düngerstreuern ab. Nachteilig ist jedoch, dass die Abdeckplanen, wenn sie zur Freigabe der Einfüllöffnung des Vorratsbehälters zurückgeschwenkt sind, sich ungeordnet oberhalb des Vorratsbehälters befinden.

Durch die DE 31 04 374 A1 ist es für einen Nutzanhänger bekannt, den Laderaum teilweise mit einer Abdeckplane, die über Blattfederstreifen zusammengerollt werden kann, abzudecken.

Der Erfindung liegt die Aufgabe zu Grunde, eine Abdeckplanenanordnung für einen Vorratsbehälter einer landwirtschaftlichen Verteilmaschine vorzuschlagen, wobei die Abdeckplane in einfacher Weise platzsparend zum Freigeben der Einfüllöffnung des Vorratsbehälters in dessen oberen Seitenbereich unterzubringen ist.

Diese Aufgabe wird erfindungsgemäß dadurch gelöst, dass an der Abdeckplane zwischen der Befestigung am Vorratsbehälter und dem in der Mitte der Abdeckplane angeordneten Längsstab zumindest eine sich spiralförmig aufwickelnde Blattfeder, die zumindest annähernd eine Länge aufweist, die der halben Breite der Abdeckplane entspricht, angeordnet ist.

Infolge dieser Maßnahmen wird im Vergleich zum Stand der Technik die Abdeckplane in eine Doppellage umgeschlagen, so dass sie in doppelter Lage über die Blattfederstreifen sehr schnell in kompakter Weise eingerollt werden kann. Durch das übereinander schlagen der beiden Hälften der Abdeckplane in Doppellage ist nur der halbe Wickelweg für das Einrollen der Abdeckplane erforderlich.

Um ein gleichmäßiges einrollen der Abdeckplane in einfacher Weise sicherzustellen, ist vorgesehen, dass auf jeder Seite der Abdeckplane eine Blattfeder angeordnet ist.

Weitere Einzelheiten der Erfindung sind der Beispielsbeschreibung und den Zeichnungen zu entnehmen. Hierbei zeigen
- Fig. 1: den oberen Bereich eines Vorratsbehälters in perspektivischer Darstellung und in Prinzipdarstellung, wobei die Abdeckplane die gesamte Einfüllöffnung des Vorratsbehälters abdeckt,
- Fig. 2: den oberen Bereich des Vorratsbehälters gemäß Fig. 1 in Seitenansicht und vergrößertem Maßstab,
- Fig. 3: der erste Schritt des Freischwenkens der Einlauföffnung und
- Fig. 4: die gesamte Freigabe der Einlauföffnung nach dem wegschwenken der Abdeckplane.

Der Vorratsbehälter 1 einer landwirtschaftlichen Verteilmaschine ist auf einem nicht dargestellten Rahmen angeordnet. Auf der in Fahrtrichtung 2 vorderen Seite 3 ist ein nicht dargestellter Kuppelrahmen zum ankuppeln des Rahmens, der den Vorratsbehälter 1 trägt, an eine Kuppelvorrichtung, beispielsweise eines Ackerschleppers, angeordnet. Der Vorratsbehälter 1 weist eine Einfüllöffnung 4 auf, die sich in dem dargestellten Ausführungsbeispiel zumindest annähernd über den gesamten oberen Querschnitt des Vorratsbehälters 1 erstreckt.

Die Einfüllöffnung 4 des Vorratsbehälters 1 ist mittels der Abdeckplane 5 abgedeckt. Die Abdeckplane 5 ist auf ihrer in Fahrtrichtung 2 vorderen Seite an dem Vorratsbehälter 1 im Bereich der Einfüllöffnung 4 mittels geeigneter Befestigungsmittel befestigt. Das andere Ende 7 der Abdeckplane 5 weist einen schlaufenartigen Bereich 8 auf. Durch diesen schlaufenartigen Bereich 8 ist eine Längsstange 9 gesteckt. An zumindest einem der äußeren Enden 10 der Längsstange 9 ist ein Schwenkbügel 11 befestigt. Weiterhin weist die Abdeckplane 5 in ihrem mittleren Bereich ebenfalls einen schlaufenartigen Bereich 12 auf, durch den ein Längsstab 13 gesteckt ist. Der Längsstab 13 verläuft parallel zu der Seite des Vorratsbehälters 1, an dem die Abdeckplane 5 befestigt ist, und zu der Längsstange 9.

Auf den jeweils beiden äußeren Seitenbereichen 14 der Abdeckplane 5 ist zwischen der Befestigung der Abdeckplane 5 an dem Vorratsbehälter 1 und dem in der Mitte angeordneten Längsstab 13 ein weiterer schlaufenartiger Bereich 15 angeordnet. In diesem schlaufenartigen Bereich 15, der sich zwischen der Befestigung der Abdeckplane 5 am Vorratsbehälter 1 und dem in der Mitte der Abdeckplane 5 angeordneten Längsstab 13 erstreckt, ist jeweils eine sich spiralförmig aufwickelnde Blattfeder 16 angeordnet. Die Blattfeder weist zumindest annähernd eine Länge auf, die der halben Breite der Abdeckplane 5 entspricht. Im Ausführungsbeispiel ist auf jeder Seite der Abdeckplane 5 ist ein sich spiralförmig aufwickelnder Blattfederstreifen 16 in dem schlaufenartigen Bereich 15 der Abdeckplane 5 angeordnet.

Die Blattfeder 16 ist in dem Bereich, in dem auch die Abdeckplane 5 an dem Vorratsbehälter 1 befestigt ist, mittels geeigneter Befestigungsmittel an dem Vorratsbehälter 1 befestigt.

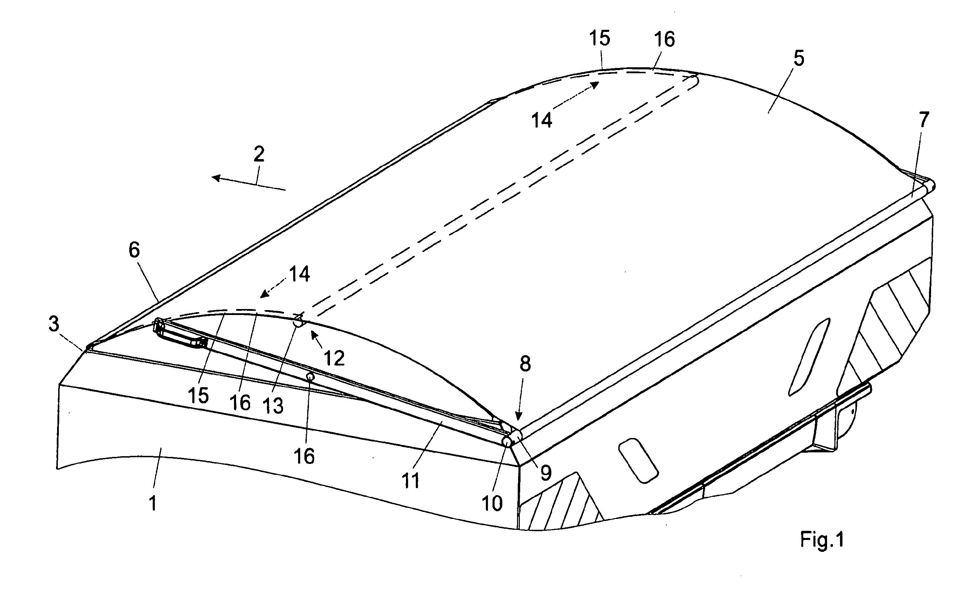

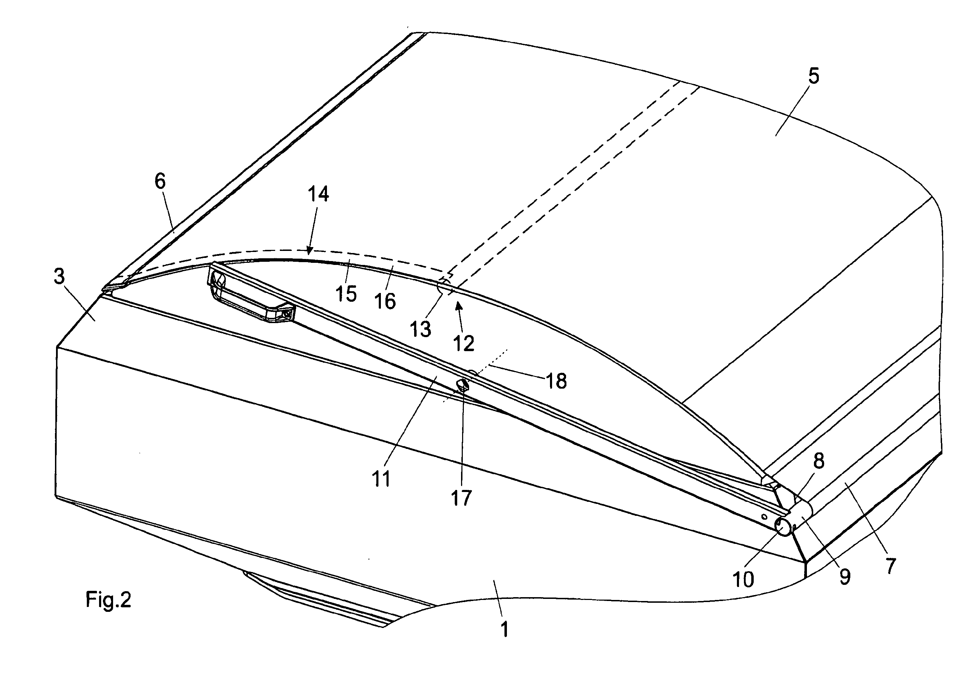

Um die Einfüllöffnung 4 des Vorratsbehälters 1 abzudecken, ist die Abdeckplane 5 mittels des Schwenkbügels 11, der mittels eines Gelenkes 17 an dem Vorratsbehälter 1 um die durch das Gelenk 17 verlaufende Gelenksachse 18 verschwenkbar ist, in die die Einfüllöffnung4 abdeckende Position gemäß Fig. 1 und 2 gebracht. Um die Einfüllöffnung 4 freizugeben, muss die Abdeckplane 5 in entsprechend kompakter Weise zusammengerollt werden.

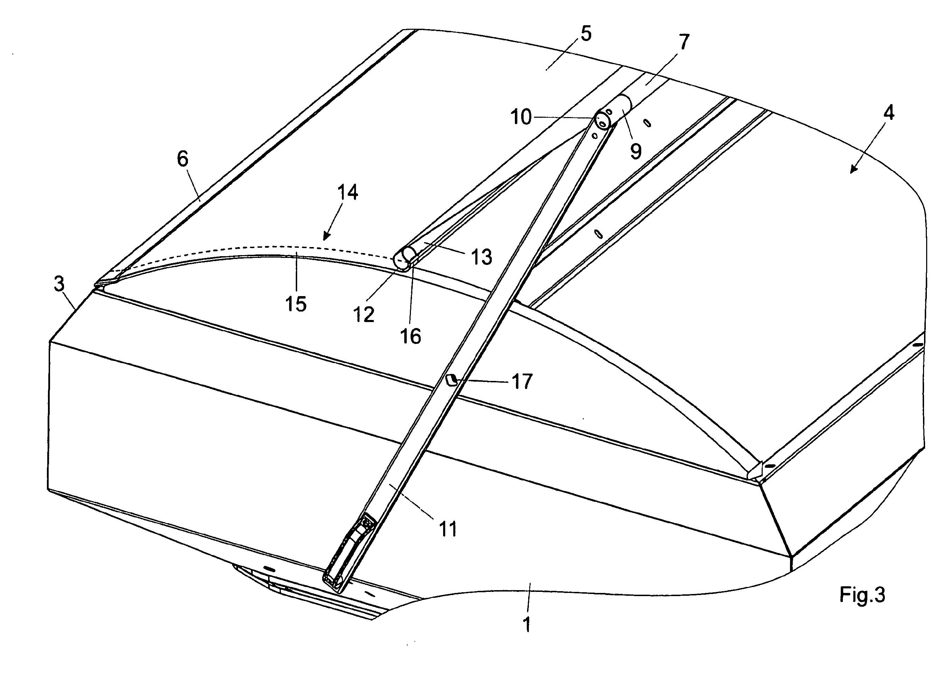

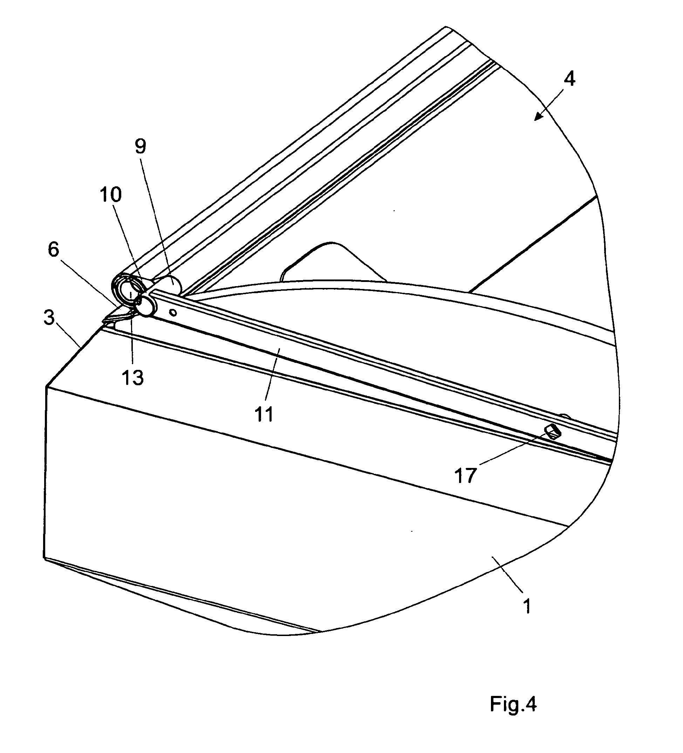

Hierzu wird der Schwenkbügel 11 über die in Fig. 3 dargestellte Zwischenposition in die in Fig. 4 dargestellte Endposition verschwenkt. Wenn der Schwenkbügel 11 die Abdeckplane 5 nicht mehr gespannt hält, fängt die Blattfeder 16 an, sich aus der gestreckten Lage in spiralförmiger Weise aufzurichten, wie die Fig. 3 zeigt. Bei einem weiteren Verschwenken des Schwenkbügels 11 rollen die Blattfederstreifen 16 die Abdeckplane 5 weiter auf, bis sie in ihre Endposition gelangt, um in kompakter Weise aufgerollt zu sein, wie Fig. 4 zeigt. Hierbei wird die Abdeckplane 5 in der Mitte umgelegt, so dass sie doppellagig aufgerollt bzw. aufgewickelt wird.

## Patentansprüche

1. Vorratsbehälter (1) einer landwirtschaftlichen Verteilmaschine, mit einer Abdeckplane (5) zum Abdecken des Vorratsbehälters (1), wobei die Abdeckplane (5) an ihrer einen Seite am Vorratsbehälter (1) und auf Ihrer gegenüberliegenden Seite an einer Längsstange (9) befestigt, wobei die Längsstange (9) an einem um eine etwa in der Mitte des Vorratsbehälters (1) sich befindlichen Gelenksachse (17) verschwenkbaren Schwenkbügel (11) befestigt ist, wobei der Schwenkbügel (11) am Vorratsbehälter (1) schwenkbar angelenkt ist, wobei die Abdeckplane (5) zur Freigabe der Einfüllöffnung (4) des Vorratsbehälters (1) mittels des Schwenkbügels (11) wegschwenkbar ist, wobei zumindest annähernd in der Mitte der Plane (5) ein Längsstab (13) angeordnet ist, der parallel zu der Seite des Vorratsbehälters (1), an der die Abdeckplane (5) befestigt ist, und zu der Längsstange (9) verläuft, **dadurch gekennzeichnet, dass** an der Abdeckplane (5) zwischen der Befestigung am Vorratsbehälter (1) und dem in der Mitte der Abdeckplane (5) angeordneten Längsstab (13) zumindest eine sich spiralförmig aufwickelnde Blattfeder (16), die zumindest annähernd eine Länge aufweist, die der halben Breite der Abdeckplane (5) entspricht, angeordnet ist.

2. Vorratsbehälter (1) nach Anspruch 1, **dadurch gekennzeichnet, dass** auf jeder Seite der Abdeckplane (5) eine Blattfeder (16) angeordnet ist.

## Claims

1. Hopper (1) of an agricultural distribution machine, having a covering tarpaulin (5) for covering the hopper (1), wherein the covering tarpaulin (5) is fastened to the hopper (1) on one side and to a longitudinal bar (9) on the other side, wherein the longitudinal bar (9) is fastened to a pivot arm (11) that is pivotable about a pivot pin (17) located approximately in the middle of the hopper (1), wherein the pivot arm (11) is articulated in a pivotable manner on the hopper (1), wherein the covering tarpaulin (5) is pivotable away by means of the pivot arm (11) in order to clear the filling opening (4) of the hopper (1), wherein a longitudinal rod (13) is arranged at least approximately in the middle of the tarpaulin (5), said longitudinal rod (13) extending parallel to that side of the hopper (1) to which the covering tarpaulin (5) is fastened and to the longitudinal bar (9), **characterized in that** at least one spirally coiled leaf spring (16), which has at least approximately a length that corresponds to half the width of the covering tarpaulin (5), is arranged on the covering tarpaulin (5) between the fastening to the hopper (1) and the longitudinal rod (13) arranged in the middle of the covering tarpaulin (5).

2. Hopper (1) according to Claim 1, **characterized in that** a leaf spring (16) is arranged on each side of the covering tarpaulin (5).

## Revendications

1. Réservoir (1) d'une machine distributrice agricole, comprenant une bâche de recouvrement (5) pour recouvrir le réservoir (1), la bâche de recouvrement (5) étant fixée au réservoir (1) sur l'un de ses côtés et à une barre longitudinale (9) sur son côté opposé, la barre longitudinale (9) étant fixée à un étrier pivotant (11) pouvant pivoter autour d'un axe d'articulation (17) se trouvant approximativement au centre du réservoir (1), l'étrier pivotant (11) étant articulé de manière pivotante sur le réservoir (1), la bâche de recouvrement (5) pouvant être écartée par pivotement au moyen de l'étrier pivotant (11) pour libérer l'ouverture de remplissage (4) du réservoir (1), une tige longitudinale (13) étant disposée au moins approximativement au centre de la bâche (5), laquelle tige longitudinale s'étend parallèlement au côté du réservoir (1) auquel la bâche de recouvrement (5) est fixée, et à la barre longitudinale (9), **caractérisé en ce qu'**au moins un ressort à lame (16) s'enroulant en forme de spirale, qui présente au moins approximativement une longueur qui correspond à la moitié de la largeur de la bâche de recouvrement (5), est disposé sur la bâche de recouvrement (5) entre la fixation au réservoir (1) et la tige longitudinale (13) disposée au centre de la bâche de recouvrement (5).

2. Réservoir (1) selon la revendication 1, **caractérisé en ce qu'**un ressort à lame (16) est disposé de chaque côté de la bâche de recouvrement (5).
